Europäisches Patentamt

European Patent Office

Office européen des brevets

(11) Veröffentlichungsnummer: **0 380 729 B1**

(12) **EUROPÄISCHE PATENTSCHRIFT**

(45) Veröffentlichungstag der Patentschrift: **30.12.92**

(51) Int. Cl.⁵: **A01N  63/02**, A01G 13/10

(21) Anmeldenummer: **89101807.9**

(22) Anmeldetag: **02.02.89**

(54) **Mittel zur Verhütung der Exkrementablage von fleischfressenden Säugetieren, insbesondere Hunden und Katzen.**

(43) Veröffentlichungstag der Anmeldung:
**08.08.90 Patentblatt  90/32**

(45) Bekanntmachung des Hinweises auf die
Patenterteilung:
**30.12.92 Patentblatt  92/53**

(84) Benannte Vertragsstaaten:
**AT CH DE FR LI NL**

(56) Entgegenhaltungen:
**FR-A- 2 546 718**
**US-A- 3 923 997**
**US-A- 4 340 587**

**PATENT ABSTRACTS OF JAPAN**

**Patent Abstract of Japan, Band 6, Nr. 180
(C-125)(1058), 14. Sept. 1982**

(73) Patentinhaber: **Maurer, Rainer**
**Im Steinriegel 23**
**W-7400 Tübingen(DE)**

(72) Erfinder: **Maurer, Rainer**
**Im Steinriegel 23**
**W-7400 Tübingen(DE)**

(74) Vertreter: **Berendt, Thomas, Dr.rer.nat.**
**Dipl.-Chem.**
**Patentanwälte Dr.rer.nat. Dipl.-Chem. Th. Berendt Dr.Ing. Hans Leyh Dipl.-Ing. Hartmut
Hering Innere Wiener Strasse 20
W-8000 München 80(DE)**

## Beschreibung

Die Erfindung betrifft die Verwendung einer mit Wasser verdünnbaren Emulsion, eines Granulats oder Pulvers mit einem Gehalt an Geruchstoffen mit Fleischaroma zur Verhütung der Exkrementablage von fleischfressenden Säugetieren, insbesondere Hunde und Katzen, zur Imprägnierung von Sandkästen, Spiel- und Sportplätzen, sowie Nutzpflanzenkulturen.

Die Verunreinigung von Spiel - und Sportflächen, insbesondere Sandkästen, aber auch von Nutzpflanzenkulturen, insbesondere in Hausgärten durch Exkrementablage von fleischfressenden Säugetieren, wie Hunden und Katzen, ist wegen der im Kot enthaltenden Fäkalbakt erien, wie Salmonellen und Wurmeier, z.B. von Hundebandwürmern (Echinococcus) oder Hundespulwürmern (Toxocaria) äußerst unerwünscht. Die Imprägnierung mit sogenannten Repellents, welche diese Tiere durch unangenehme Gerüche vom Betreten solcher Flächen abhalten, ist meist wegen der Größe der Flächen, wegen unangenehmer Gerüche auch für den Menschen undwegen der Unbeständigkeit der Repellents, z.B. bei Regen und anderen Witterungseinflüssen schwer oder gar nicht durchführbar.

Es wurde nun gefunden, dass Mittel, die als Wirkstoff einen oder mehrere Geruchsstoffe mit Fleischaroma, insbesondere solche natürlicher oder naturidentischer Herkunft enthalten, fleischfressende Säugetiere, insbesondere Hunde und Katzen, an der Exkrementablage wirksam hindern können. Dies hängt offenbar mit der verhaltenspsychologischen Eigenart solcher Tiere zusammen, nicht ihr Fressen durch Exkremente zu verunreinigen. Überraschenderweise werden die Tiere durch die erfindungsgemäßen Mittel nicht angelockt.

Vielmehr gehört es zu den Eigentümlichkeiten des Verhaltens der genannten Tiergruppe, insbesondere von Hunden und Katzen, dass sie zur Kotablage Stellen aufsuchen, in denen der Kot leicht verscharrt werden kann, bzw. einen weichen Untergrund, wie es bei Rasen für Spiel - und Sportzwecke und insbesondere bei Sandkästen vorliegt.

Werden nun solche Stellen durch entsprechende Fleischaromastoffe geruchlich zu "Freßplätzen" umfunktioniert, so werden die Tiere wirksam von der Exkrementablage gehindert.

Geruchsstoffe mit Fleischaroma sind an sich bekannt, vgl. Römpps Chemielexikon, 8. Auflage 1981, Seite 1313 - 1314 mit Literaturangaben. Hierzu gehören Proteinabbaustoffe, Kohlenwasserstoffe, Alkohole, Ether, Carbonylverbindungen, Carbonsäuren und Ester, sowie organische Stickstoff- und Schwefelverbindungen, z.B. 4-Methyloctansäure, 4-Methylnonansäure und Homologe. Es sind mehrere hundert derartige Geruchstoffe bekannt, von denen solche natürlicher oder naturidentischer Herkunft bzw. Struktur bevorzugt sind. Sie sind teilweise unlöslich oder schwerlöslich und werden daher vorzugsweise in Form von Emulsionen oder auch von Granulat bzw. Pulvern mit bekannten Adjuvanten formuliert. Mit den Emulsionen, die mit Wasser verdünnbar sein sollen, können beispielsweise Sandkästen durch einfaches Gießen mit einer Gieß- oder Sprühvorrichtung über lange Zeiträume imprägniert werden.

Als Granulat oder Pulver eignen such z.B. Substanzen, die eine Polymermatrix bilden, wobei der Aromastoff in die Zwischenräume dauerhaft eingelagert ist und nur langsam abgegeben wird. Solche Polymere sind Polyolefine, wie Polypropylen und Hoch- und Niederdruckpolyethylen und Ethylenvinylacetat.

Der Fleischgeruch ist für den Menschen eher angenehm und der Schutz der imprägnierten Spiel - und Sportflächen aber auch von z.B. Gemüsebeeten in Hausgärten, überraschend wirksam und andauernd.

Das erfindungsgemäße Mittel ist auch im innerstädtischen Bereich (Bürgersteige,Laternen) wirksam.

## Patentansprüche

1. Verwendung einer mit Wasser verdünnbaren Emulsion, eines Granulats oder Pulvers mit einem Gehalt an Geruchstoffen mit Fleischaroma zur Verhütung der Exkrementablage von Säugetieren, insbesondere Hunden und Katzen.

2. Verwendung nach Anspruch 1 in Form eines Granulats oder Pulvers aus einer Polymermatrix aus einem Polyolefin oder Ethylenvinylacetat.

3. Verwendung nach Anspruch 1 zur Verhütung der Exkrementablage von Hunden und Katzen an Sandkästen, Spiel - oder Sportplätzen sowie Nutzpflanzenkulturen.

## Claims

1. Use of a water-thinnable emulsion, granulated material or powder containing an odour resembling meat aroma for preventing the deposit of excrements of mammals, in particular of dogs and cats.

2. Use as claimed in claim 1 in the form of a granulated material or powder comprising a polymer matrix consisting of a polyolefin or ethylene vinyl acetate.

**3.** Use as claimed in claim 1 for preventing the deposit of excrements of dogs and cats in sand pits, playing or sport grounds as well as in cultures of useful plants.

## Revendications

**1.** Utilisation d'une émulsion diluable à l'eau de granulés ou de poudres, contenant des substances odoriférantes ayant un arôme de viande, pour éviter les dépôts d'excréments d'animaux mammifères, en particulier des chiens et des chats.

**2.** Utilisation selon la revendication 1, sous la forme de granulés ou de poudres d'une matrice de polyoléfine ou d'acétate de vinyléthylène.

**3.** Utilisation selon la revendication 1, pour éviter les dépôts d'excréments de chiens et de chats dans les bacs à sable, les terrains de jeu ou de sport ainsi que sur les cultures de plantes utiles.